# EUROPEAN PATENT APPLICATION

(11) **EP 1 712 166 A1**
(43) Date of publication of application: **18.10.2006**
(21) Application number: 06007494.5
(22) Date of filing: 10.04.2006
(51) Int. Cl.: A47J 17/14, A23N 7/02, A23N 12/02, A22C 29/04

(54) **Food processing device**

(30) Priority: 12.04.2005 IT BO20050233
(71) Applicant: LA MINERVA DI CHIODINI MARIO S.R.L., 40138 Bologna (IT)
(72) Inventor: Salati Chiodini, Daniele, 40138 Bologna (IT)
(74) Representative: Negrini, Elena

(57) **Abstract**

Food processing device particularly fit to peel potatoes, carrots, tubers in general and similar vegetables and to clean, for example, mussels, other seafood and the like.
Said food processing device comprises at least processing means, first (3) and second (4), for said food and comprises a chassis mean (5) having a right solid form and containing at least said processing means, first (3) and second (4).
The first processing means (3) includes a first abrasive (11) for peeling potatoes, carrots or the like and the second processing means (4) includes a second abrasive (12) and/or means for cleaning.

## Description

The present invention refers to the food preparation and to the tools for the kitchen and it relates to a food processing device particularly fit to peel potatoes, carrots, tubers in general and similar vegetables and to clean, for example, mussels, other seafood and the like.

There are known potato peeling device provided with a vertical cylindrical container, whose internal wall is equipped with an abrasive and whose bottom has a rotating abrasive plate.

There are also known devices for cleaning mussels provided with a vertical cylindrical container containing a perforated cylinder or a cylinder,with abrasive for the cleaning and whose bottom includes a smooth rotating plate or a rotating plate equipped with brushes or abrasive.

Some drawbacks of said known devices consist in that their cylindrical container cannot reduce the noise produced during the operation and, furthermore, they cannot be installed in a built-in manner or housed between furniture or between other appliances since said cylindrical form creates dirty interstices and receptacles difficult to be cleaned and to be disinfected and obliging disadvantageously to the external installation of the electric power wirings and of the feeding and exhaust tubes for the fresh water and for discharging the dirty water.

Further drawback of said known devices consists in that they are suitable either for peeling or for cleaning and therefore said operations need two different devices.

Other drawback of said know peeling devices consists in that it is very complicate, very expensive and it takes a lot of time to reset their abrasive portions.

An object of the present invention is to propose a peeling and cleaning device, which can limit or reduce the operation noise and furthermore fit to be installed in a built-in manner or housed between furniture or other appliances without creating cleaning or hygiene problems.

Other object is to propose a single device for carrying out both the peeling and cleaning operations through the simple substitution of interchangeable operational members.

Further object is to propose a device whose abrasive portions can be reset easily, quickly and economically.

The characteristics of the invention are highlighted in the following with particular reference to the attached drawings, in which:
- Figure 1 shows a front view of the foods processing device of the present invention;
- Figure 2 shows a partial sectioned front view of the device of Figure 1;
- Figure 3 shows an enlarged top view of the device of Figure 1 in which some parts are removed away for better evidence of others.

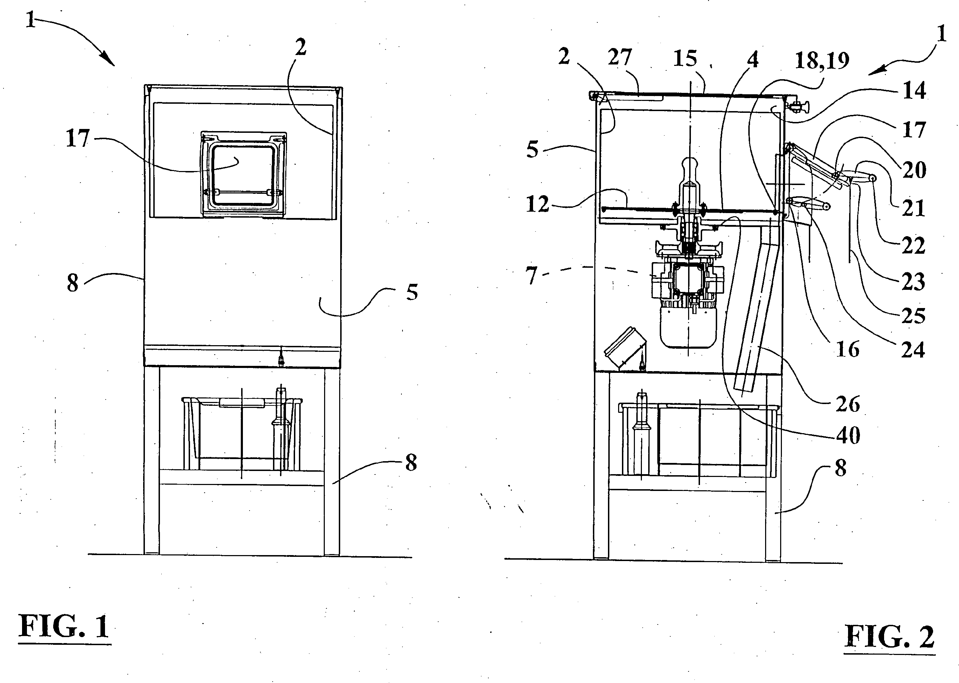

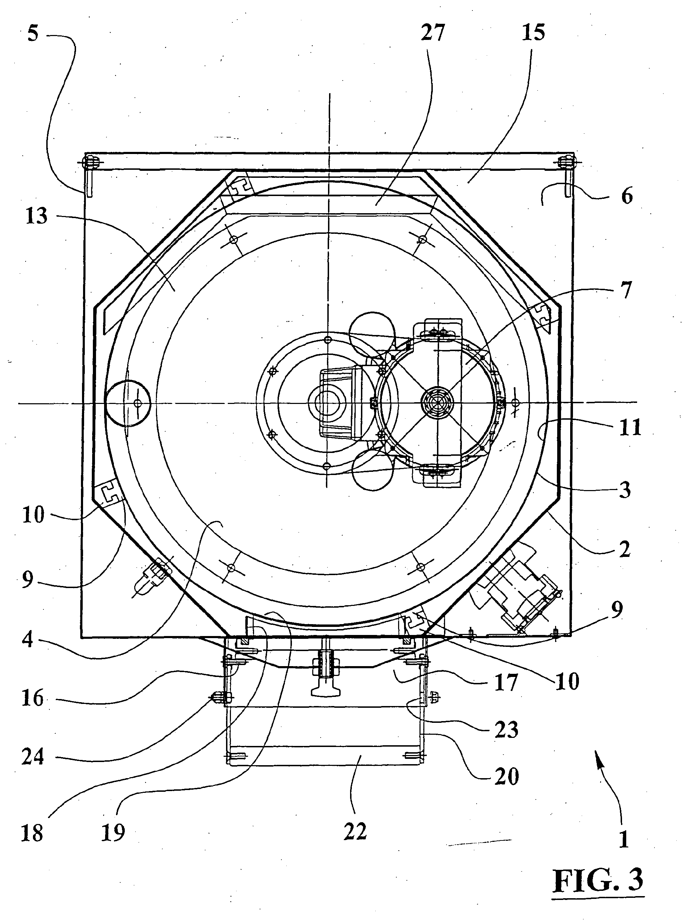

With reference to Figures 1 - 3, the numeral 1 indicates the foods processing device of the present invention, comprising a container 2 internally equipped with processing means, first 3 and second 4, for said foods.

The device 1 comprises a chassis mean 5 made of metallic plate, for example in stainless steel, folded in shape of right solid, like a parallelepiped, and it includes at least the container 2 which forms with said chassis mean 5 an interspace 6.

The chassis mean 5 is preferably parallelepiped or cube shaped and has sharp, rounded-off or also smoothed corners up to become an octagonal section form solid.

The device optionally comprises supporting means 8 to support the container 2 and the other organs on the floor. Said supporting means 8 have a footprint size almost coincident with or a little bit smaller than that of the chassis mean 5. In alternative, the device can be provided with supporting feet.

The chassis mean 5 can be extended until to cover at least a portion of the supporting means 8.

The chassis mean 5 is carried out integral or with only a single folded and welded sheet or, in alternative, in an upper and lower portions for covering the supporting means 8 and fixed mutually and to a horizontal separator 40 that separates the volume for the container 2 from that for the driving means 7.

In the first case the chassis mean includes continuous faces without junctions, but it needs an expensive additional working to eliminate the sign left by the inner welding of the chassis mean to the separator 40 or to supports of this latter.

In the second case the faces of the chassis mean have a horizontal junction but said chassis mean is cheaper to be produced.

The chassis mean 5 size corresponds to the size of the kitchens built-in furniture or appliances or the size of the built-in structures so it allows the easy built-in installation or between furniture or appliances without recesses or anti-hygienic receptacles.

Optionally, the interspace 6 contains acoustic insulator means, to increase the silencing efficiency of the chassis mean, thermal insulator means, to decrease the heating of sensitive foods. Particularly in the case of very delicate foods, such as the molluscs, the interspace can be equipped with refrigeration means and eventually allows the passage of water tubes and electric cables.

The chassis mean 5 includes also driving means 7, for example a chain-drive set powered by an motor with reducer having vertical axis, for the second processing mean 4.

The container 2 is made of folded metallic sheet and has vertical axis right solid form and with polygonal transversal sectioned shaped as regular octagon.

The processing means are removable and interchangeable to facilitate the cleaning and the maintenance of it and to effect different kind of working for different food products.

The first processing mean 3 has a cylindrical form and is fixed in removable way inside the container 2 in almost coaxial manner thereto.

The first processing mean 3 is externally provided with first guides 9, for example "T" rail shaped. The container 2 is internally provided with second guides 10, for example with a longitudinal "T" shaped hollow.

Said guides 9, 10, for instance made of nylon or the like, are complementary, parallel to the axes of the first processing mean 3 and of the container 2, and they are positioned in such a manner to allow the fixing, by means of axial sliding motion, of the first processing mean 3 to the container 2.

The second guides 10 are fixed to inner corners of the container 2 to optimize the use of the volumes.

The second processing mean 4 has discoid form and is removable fixed, by means of plug-in or joint to the driving mean 7 on the bottom of the container 2.

The internal face of the first processing mean 3 includes a first abrasive 11 for peeling potatoes, carrots or the like.

The first abrasive 11 is fixed to the first processing mean 3 by means of glue, resin or the like or, optionally it is fixed in removable way to the first processing mean 3 by means of repositioning mean, such as inserts, screws, joints or the like. In alternative the invention also provides to carry out the abrasive by working the internal face of the first processing mean.

The upper face of the second processing mean 4 includes a circular shaped second abrasive 12 for peeling foods.

The second circular abrasive 12 is fixed in removable way to the second discoidal processing mean 4 by means of a perimetric ring 13 fixed with screws.

In alternative the second abrasive 12 can be fixed in removable way to the second processing mean 4 by means of repositioning mean such as inserts, screws, joints or the like or fixed in irremovable way by means of glue, resin or the like.

To pass from peeling to cleaning it is enough to replace the processing means.

The first processing mean 3, for cleaning mussels or the like, comprises a wall, for example made of stainless steel sheet, arranged with passing holes and the upper face of the second processing mean 4 for cleaning comprises moving means for the same products, for instance consisting of dustpan, protruding lobes or brushes.

The chassis mean 5 is on the upper side equipped with a loaded opening 14, for the insertion of the working products and for the substitution of the processing means, provided with a closing cover 15 equipped with a gutter mean 27 fit to stop the condensed drops during the opening of the cover 15.

The chassis mean 5 is laterally provided with an unloading opening 16 having a closing door 17.

The container 2 and the first processing mean 3 are provided with respective windows 18, 19 faced to the unloading opening 16 to allow the worked products come out through the opening 16.

The upper side of the closing door 17 is hinged to the chassis mean 5 and the opposite lower portion of the door has a pivot 20 for an end of a kneeing mean 21, whose remaining end has a handle 22.

The kneeing mean 21 comprises two parallel side plates, each of them being centrally provided with a notch 23 fit, in a closure condition, to engage a match mean 24 fixed to the chassis mean 5.

The device also comprises a protection bulkhead 25 fit to prevent the entry of the hands in conformity with the safety norms. The bulkhead is fixed externally to the chassis mean 5, for instance by two side winglets, in front of the unloading opening 16.

In an opening condition of the closing door 17, the notch 23 is engageble in an upper edge of the protection bulkhead 25, in order to block removably the door 17 in open position and contributing to the security preventing the approach of the hands to the opening 16.

The separator 40 is downwardly provided with an outlet 26 for the peelings or cleaning residues flowing in a container provided with a separator of the solid residue from the liquid residue, whose initial level raises a floating a magnet thereof activates one stop magnetic switch of the device when the level of the liquid goes beyond a predetermined threshold level.

As shown, the operation of the device provides the use of the opportune interchangeable processing means to carry out peeling, cleaning or other workings.

A simple variant, particularly suitable for the peeling tubers, which can be understood without specific drawings, provides that the container 2 has a cylindrical form and made integral with the first processing mean 3. In other words, said variant provides that the container 2 and the first processing mean 3 are made by a single fixed or detachable element.

A further simple variant, which can be also understood without specific drawings, provides that the device is not equipped with the container 2 and that the first processing mean is fixed, in a blocked or removable manner, to the separator 40 and/or to the chassis mean.

An advantage of the present invention is to provide a peeling and cleaning device, which can limit or reduce the operation noise and suitable to be installed, in built-in manner of by insertion, between furniture or other appliances without creating cleaning or hygienic problems.

Other advantages are to provide a single device to carry out both the peeling and cleaning operations and to provide a device whose abrasive portions can be restored easily, quickly and economically.

## Claims

1. Food processing device comprising at least processing means, first (3) and second (4), for said food; said device (1) is **characterized in that** it comprises a chassis mean (5) having a right solid form and containing at least said processing means, first (3) and second (4).

2. Device according to claim 1 **characterized in that** the chassis mean (5) is parallelepiped shaped with sharp, smooth or round-off corners.

3. Device according to claim 1 **characterized in that** it comprises at least a container (2) fixed into the chassis mean (5) and containing the processing means, first (3) and second (4).

4. Device according to claim 3 **characterized in that** it comprises an interspace (6) located between the container (2) and the chassis mean (5).

5. Device according to claim 4 **characterized in that** the interspace (6) contains at least acoustic and/or thermal insulator means.

6. Device according to claim 4 **characterized in that** the interspace (6) contains at least refrigeration means.

7. Device according to claim 1 **characterized in that** the chassis mean (5) also contains driving means (7) for the processing means, first (3) and/or second (4).

8. Device according to claim 1 **characterized in that** the chassis mean (5) has size corresponding to those of the furniture or appliance for installation in kitchens or in built-in structures.

9. Device according to claim 1 **characterized in that** the chassis mean (5) is made of folded metallic sheet.

10. Device according to claim 1 **characterized in that** it comprises supporting means (8) to support at least the container (2) and having a footprint almost equal to, or a little smaller than, that of the chassis mean (5).

11. Device according to claim 10 **characterized in that** the chassis mean (5) extends itself to cover at least a portion of the supporting means (8).

12. Device according to claim 11 **characterized in that** the chassis mean (5) is integral or is made in an upper and a lower portions mutually fixed.

13. Device according to claim 3 **characterized in that** the container (2) has right solid form with polygonal section.

14. Device according to claim 3 **characterized in that** the container (2) has regular octagon section.

15. Device according to claim 1 **characterized in that** the container (2) is made of folded metallic sheet.

16. Device according to claim 1 **characterized in that** the first processing mean (3) is cylindrical shaped and it is fixed.

17. Device according to claim 1 **characterized in that** the first processing mean (3) has cylindrical form and it is removably fixed inside the container (2).

18. Device according to claim 3 **characterized in that** the first processing mean (3) is nearly coaxial in respect with the container (2).

19. Device according to claim 18 **characterized in that** the first processing mean (3) is externally provided with first guides (9) and the container (2) is internally provided with second guides (10), said guides (9, 10) are complementary, parallel to the axes of the first processing mean (3) and of the container (2) and positioned in such a manner to allow the fixing, in axial sliding manner, of the first processing mean (3) to the container (2).

20. Device according to claims 13 and 19 **characterized in that** the second guides (10) are fixed to inner corners of the container (2).

21. Device according to claim 3 **characterized in that** the container (2) is of cylindrical form and is integral with the first processing mean (3).

22. Device according to claim 1 **characterized in that** the internal face of the first processing mean (3) includes a first abrasive (11) for peeling potatoes, carrots or the like.

23. Device according to claim 22 **characterized in that** the first abrasive (11) is removably fixed to the first processing mean (3) by means of a repositioning mean, inserts, screws, joints or the like.

24. Device according to claim 22 **characterized in that** the first abrasive (11) is fixed to the first processing mean (3) by means of glue, resin or the like or is carried out by working the first processing mean (3).

25. Device according to claim 1 **characterized in that** the first processing mean (3) comprises a wall arranged with passing holes for cleaning mussels or the like.

26. Device according to claims 3 and 7 **characterized in that** the second processing mean (4) is removably fixed, in plug-in or in built-in manner, to the driving mean (7) on the bottom of the container (2).

27. Device according to claim 1 **characterized in that** the second processing mean (4) is discoidal shaped.

28. Device according to claim 1 **characterized in that** the upper face of the second processing mean (4) includes a second abrasive (12) for the peeling.

29. Device according to claim 28 **characterized in that** the second abrasive (12) is circular formed and it is removably fixed by means of a perimetric ring (13) fixed to second processing mean (4) with screws.

30. Device according to claim 28 **characterized in that** the second abrasive. (12) is removably fixed to second processing mean (4) by means of repositioning mean, inserts, screws, joints or the like.

31. Device according to claim 28 **characterized in that** the second abrasive (12) is fixed to second processing mean (4) by means of glue, resin or the like.

32. Device according to claim 1 **characterized in that** the upper face of the second processing mean (4) includes moving means for food for cleaning them.

33. Device according to claim 1 **characterized in that** the chassis mean (5) is upwardly equipped with an loaded opening (14) provided of a closing cover (15).

34. Device according to claim 1 **characterized in that** the chassis mean (5) is laterally equipped with an unloading opening (16) provided with a closing door (17).

35. Device according to claims 3 and 34 **characterized in that** the container (2) and the first processing mean (3) are provided with respective windows (18, 19) faced to the unloading opening (16).

36. Device according to claim 34 **characterized in that** a side of the closing door (17) is hinged to the chassis mean (5) and the opposite portion has a pivot (20) for an end of a kneeing mean (21) whose remaining end has a handle (22) and centrally provided with a notch (23) fit, in a closing condition, to engage with a match mean (24) fixed to the chassis mean (5).

37. Device according to claim 34 **characterized in that** it comprises a protection bulkhead (25) externally fixed to the chassis mean (5) in front of the unloading opening (16).

38. Device according to claims 36 and 37 **characterized in that** in an opening condition of the closing door (17), the notch (23) is engageble in an upper edge of the protection bulkhead (25) to block removably the door (17).

39. Device according to claim 3 **characterized in that** the container (2) is downwardly provided with an outlet (26) for the peeling or cleaning residues.

40. Device according to claim 33 **characterized in that** the closing cover (15) is internally provided with a gutter mean (27) fit to stop the condense drops during the opening of the cover (15).
